# EUROPÄISCHE PATENTSCHRIFT

(11) **EP 2 016 203 B1**
(45) Veröffentlichungstag und Bekanntmachung des Hinweises auf die Patenterteilung: **25.12.2013**
(21) Anmeldenummer: 07718424.0
(22) Anmeldetag: 03.05.2007
(51) Int. Cl.: C22B 7/02, C22B 1/24, C22B 1/08, C04B 18/08, C04B 18/30, C05F 7/00, C05G 3/00

(54) **THERMISCHES VERFAHREN ZUR ABTRENNUNG VON SCHWERMETALLEN AUS ASCHE IN AGGLOMERIERTER FORM**
THERMAL PROCESS FOR SEPARATING OFF HEAVY METALS FROM ASH IN AGGLOMERATED FORM
PROCÉDÉ THERMIQUE DE SÉPARATION DE MÉTAUX LOURDS DE CENDRES SOUS FORME AGGLOMÉRÉE

(30) Priorität: 03.05.2006 AT 7592006
(43) Veröffentlichungstag der Anmeldung: 21.01.2009
(73) Patentinhaber: Outotec Oyj, 02230 Espoo (FI)
(72) Erfinder: BOUTOUSSOV, Mikhail, 1190 Wien (AT)
(74) Vertreter: Wildhack & Jellinek
(86) Internationale Anmeldenummer: PCT/AT2007/000210
(87) Internationale Veröffentlichungsnummer: WO 2007/124527

(56) Entgegenhaltungen:
- EP-A- 0 034 389
- EP-A- 0 566 376
- DE-A1- 10 243 840
- GB-A- 1 587 023
- PATENT ABSTRACTS OF JAPAN Bd. 2003, Nr. 12, 5. Dezember 2003 (2003-12-05) & JP 2006 003013 A (SUMITOMO HEAVY IND LTD), 5. Januar 2006 (2006-01-05)
- PATENT ABSTRACTS OF JAPAN Bd. 016, Nr. 351 (C-0968), 29. Juli 1992 (1992-07-29) & JP 04 106189 A (OGAWA DENKI KK), 8. April 1992 (1992-04-08)
- DATABASE WPI Week 198649 Derwent Publications Ltd., London, GB; AN 1986-325023 XP002401451 & SU 1 227 607 A (URALS KIROV POLY) 30. April 1986 (1986-04-30)
- DATABASE WPI Week 198435 Derwent Publications Ltd., London, GB; AN 1984-217084 XP002401452 & JP 59 128288 A (NAKAGAWA K) 24. Juli 1984 (1984-07-24)
- DATABASE WPI Week 200614 Derwent Publications Ltd., London, GB; AN 2006-130400 XP002401453 & JP 2006 035088 A (MITSUBISHI JUKOGYO KK) 9. Februar 2006 (2006-02-09)
- DATABASE WPI Week 200247 Derwent Publications Ltd., London, GB; AN 2002-440109 XP002401454 & JP 2002 096052 A (GOMI Y) 2. April 2002 (2002-04-02)

## Beschreibung

Die Erfindung betrifft ein Verfahren zur Abtrennung von Schwermetallen aus Asche gemäß Anspruch 1 sowie ein Ascheagglomerat gemäß Anspruch 8.

Die Erfindung liegt auf dem Gebiet der Behandlung von, insbesondere phosphorhaltigen, Aschen aus verschiedensten Quellen. Vor allem die phosphorhältigen Aschen sind wichtige Quellen für die Herstellung von Phosphordüngern für Pflanzen oder Getreide.

Die derzeitige Gesetzeslage in Europa gestattet jedoch den Einsatz von originären, unbehandelten Aschen als Düngemittel nicht, da diese Aschen zumeist einen unzulässig hohen Gehalt an Schwermetallen aufweisen. Diese Schwermetalle können beispielsweise Blei, Kupfer, Kadmium, Chrom und/oder Zink sein. Für jedes dieser Schwermetalle gibt es einen festgelegten Höchstwert, der nicht überschritten werden darf.

Die untenstehende Tabelle 1 zeigt die Zusammensetzungen von unterschiedlichen Aschen verschiedener Herkunft und deren Gehalt an Schwermetallen sowie die Grenzwerte für die Schwermetallgehalte für Düngemittel in Österreich. Tabelle 1 verdeutlicht, dass die Asche erst nach einer Schwermetallreduktion als Düngemittel eingesetzt werden darf.

**Tabelle 1:**

| **Herkunft** | **P205,%** | **Fe203,%** | **Zn**,mg/kg | **Pb**,mg/kg | **Cu**,mg/kg | **Cd**,mg/kg | **Cr**,mg/kg |
|---|---|---|---|---|---|---|---|
| WSO 1-2 Wien | 20,8 | 23,2 | 2575 | 284 | 635 | 5,1 | 104 |
| WSO 3 Wien | 20,1 | 18,6 | 1978 | 220 | 543 | 3,4 | 92 |
| Vodokanal S.Pb | | | 2200 | 400 | 730 | 2,7 | 400 |
| Berlin Deutschland | 15,5 | 22,6 | 2680 | 190 | 1560 | 3,4 | 129 |
| Wilhelmsh. Deutschland | 18,1 | 19,6 | 2030 | 156 | 552 | 2,7 | 150 |
| Noord Brab. Holland | 12,6 | 11 | 2240 | 340 | 970 | 4,1 | 205 |
| Grenzwerte für Österreich | | | **1666**¹⁾ | 100 | **388**¹⁾ | **11** | **333**¹⁾ |

| | | | | | | | |
|---|---|---|---|---|---|---|---|
| ¹⁾ Grenzwert laut Frachtenregelung | | | | | | | |

Aus dem Stand der Technik sind verschiedene Verfahren bekannt, um den Schwermetallgehalt von Aschen zu reduzieren bzw. um die Schwermetalle von der Asche abzutrennen oder den wertvollen Phosph aus der Asche zu gewinnen.

So werden beispielsweise in der US 4,351,809, der US 3,235,330, der US 3,241,917 sowie der JP 11319762 oder der JP 2001198546 thermische Verfahren zur Extraktion von Phosphor aus Asche beschrieben, bei denen phosphorhältige Asche in einer reduktiven Atmosphäre auf bis zu 1200° in Gegenwart eines kohlenstoffhaltigen Materials erhitzt wird. Der Phosphor wird dabei verdampft und kann später in reiner Form rekondensiert oder oxydiert werden. Allerdings sind derartige Verfahren sehr energieaufwändig, sehr teuer und weisen überdies eine große Anzahl an Verfahrensschritten auf.

Weiters sind beispielsweise aus der DE 10206347, der US 5,078,786, der US 6,770,249 oder der DE 10206347 Verfahren bekannt, bei denen Phosphor oder Schwermetalle aus Asche auf hydrometallurgischem Wege herausgelöst bzw. -gelaugt werden. Derartige hydrometallurgische Verfahren haben jedoch den Nachteil, dass sie aufwändig und kostspielig sind. Außerdem können bei derartigen Verfahren gewisse Giftstoffe, insbesondere organischer Art, zurückbleiben.

Bei einer weiteren Methode zur Entfernung von Schwermetallen aus Asche wird Asche in Gegenwart eines Chlorierungsmittels einer thermischen Behandlung unterzogen. Die Asche wird dabei unter Chlorgasatmosphäre auf eine Temperatur von über 900° erhitzt. Nachteilig bei diesem Verfahren ist, dass die entstehenden gasförmigen Metallchloride aus dem Reaktionsbereich abgezogen werden müssen, wohingegen das Chlorgas im Reaktionsbereich verbleiben muss. Ein derartiges Verfahren funktioniert lediglich im Labormaßstab, ein Umlegen auf einen industriellen Maßstab, der noch dazu kontinuierlich betrieben werden soll, ist schwierig und sehr kostspielig.

*Weitere Verfahren zur Behandlung von Asche werden in der* SU 1 227 607*, der* EP 566 376*, der* EP 034 389, *der* JP 04 106189, *der* JP 59 128288, *der* JP 2005 131615 *und der* JP 2006 131962 *beschrieben.*

Ein weiteres mögliches Verfahren wird in der DE 10243840 beschrieben. Dabei wird Asche mit Metallchloriden, insbesondere Alkali- oder Erdalkalichloriden, gemischt und die Mischung auf 1000 bis 1100° erhitzt. Dadurch wird ein Chlorierungsmittel in der direkten Nachbarschaft der Aschepartikel zur Verfügung gestellt, das lokal reagieren kann. Die dabei entstehenden gasförmigen Schwermetallchloride werden abgezogen. Dabei entstehen große Mengen an Feinstaub, die zusammen mit den Schwermetallchloriden abgezogen werden. Nachteilig bei diesem Verfahren ist, dass sämtliche Metallteile des thermischen Reaktors bei hohen Temperaturen dem aggressiven Chlorgas ausgesetzt sind und dementsprechend stark korrodieren. Außerdem ist Chlorgas weniger effektiv bei der Entfrachtung von Schwermetallen als HCl-Dampf bei gleichen Temperaturen. Darüber hinaus funktioniert dieses Verfahren bei einem Einsatz einer viskosen Paste aus Asche, Salzen und Wasser nicht. Aus diesen genannten Gründen ist das Verfahren ökonomisch nicht effizient durchführbar.

Es ist somit Aufgabe der Erfindung, ein alternatives Verfahren zur Abtrennung von Schwermetallchloriden aus Asche zu schaffen, das die oben erwähnten Nachteile des Standes der Technik nicht aufweist und das darüber hinaus eine gute Extraktionseffizienz für Schwermetalle aufweist, den Reaktor in geringerem Ausmaß schädigt bzw. korrodiert und einfach, sicher und kostengünstig zu führen ist.

Diese Aufgabe wird durch das erfindungsgemäße Verfahren nach Anspruch 1 gelöst.

Das Verfahren nach Anspruch 1 hat den Vorteil, dass durch die Herstellung eines Ascheagglomerats aus Asche und Chloriden ein kompaktes und leicht zu behandelndes, nicht staubendes Ausgangsmaterial geschaffen wird. Durch die Ausgestaltung als Granulat wird überraschenderweise eine besonders hohe Extraktionsrate der zu entfernenden Schwermetalle, insbesondere der umweltgefährdensten Metalle, wie beispielsweise Cu, Zn, Pb, Cd, Cr etc, gewährleistet. Es wird dadurch möglich, die Schwermetallbelastung der Asche dramatisch zu reduzieren und in einem Bereich weit unterhalb der geforderten Grenzwerte zu gelangen. Die für die Umwelt unbedenklichen Metalle wie z.B. Verbindungen mit Si, Al, Mg, Ca, Mn werden bei diesem Verfahren nicht umgesetzt. Die eventuell nach der Verbrennung bzw. Einäscherung noch verbliebenen organischen Verbindungen werden im Zuge des Verfahrens vollständig zerstört, wodurch ein sehr reines, unbelastetes Granulat erhalten wird.

Eine vorteilhafte Zusammensetzung der Ausgangsmischung, bei der eine effiziente Extraktion gegeben ist, wird durch die Merkmale des *ersten Teils des* Anspruchs 2 beschrieben.

Gemäß den Merkmalen des *zweiten Teils des* Anspruchs 2 können zusätzlich auch weitere Füllstoffe gemeinsam mit der Asche und den Salzen granuliert werden. Dies führt zu Kosteneinsparungen beim Prozess. Gleichzeitig kann die Endzusammensetzung der erhaltenen schwermetallfreien Asche bereits zu Beginn gesteuert und bestimmt werden.

Eine weitere vorteilhafte Möglichkeit der Zugabe der Salze zur Asche wird durch die vorteilhaften Merkmale des Anspruchs 3 beschrieben. Durch diese Maßnahme wird der Granulierungsprozess wesentlich erleichtert. Außerdem wird die Staubbelastung während der Granulierung verringert.

Die Granulierung wird vorteilhafter Weise nach den Merkmalen des Anspruchs *4* durchgeführt. Damit kann die Effizienz der Extraktion wirkungsvoll gesteuert werden.

Besonders effiziente Erwärmungsprofile werden durch die Merkmale *des Anspruchs 5* beschrieben. Auf diese Weise wird in für den Reaktor schonender Weise eine sehr hohe Effizienz der Extraktion der Schwermetalle erreicht. Für Magnesiumchlorid und Calciumchlorid sind vorteilhafte Maximaltemperaturen angegeben, bei denen der Prozess seine bestmögliche Wirkung aufweist.

Vorteilhafte Methoden der Erwärmung werden durch die Merkmale *des ersten Teils* des Anspruchs 6 gewährleistet.

Die Auswahl der Korngrößen der Ausgangsstoffe hat Auswirkung auf die Granulatbildung sowie die Effizienz der Schwermetallreduktion. Die Korngrößen sollten sich vorteilhafter Weise gemäß den Merkmalen *des zweiten Teils* des Anspruchs *6* gestalten.

In Anspruch 7 wird ein Verfahren zur Herstellung von Düngemitteln beschrieben, dem das aus dem zuvor beschriebenen Verfahren erhaltene Granulat zugrundegelegt wird. Auf diese Weise kann die Zusammensetzung des Granulates leicht verändert und gesteuert werden.

Durch das Verfahren wird ein Ascheagglomerat erhalten, das eine besonders vorteilhafte Zusammensetzung und Struktur aufweist. Dieses erfindungsgemäße Ascheagglomerat kann direkt als Substrat bzw. als Düngemittel eingesetzt werden, da es hervorragende Eigenschaften hinsichtlich der Phosphorverfügbarkeit aufweist.

*Ein die Zulassungskriterien erfüllendes* Ascheagglomerat ist durch die Merkmale des Anspruches *8* charakterisiert. Die gesinterte Matrix bewirkt die vorteilhaften Substrateigenschaften, im Gegensatz zu beispielsweise Aschegranulaten, die lediglich kalt kompaktiert bzw. granuliert wurden.

Das Ascheagglomerat weist vorteilhafterweise die Struktur gemäß Anspruch 9 auf. Vorteilhafte Größen des Ascheagglomerats sind in Anspruch *10* beschrieben.

Die in Anspruch *10* beschriebenen Porositäten gewährleisten eine vorteilhafte Substratwirkung.

Das Ascheagglomerat verfügt über einen für die Düngung wichtigen Phosphorpentoxidgehalt gemäß Anspruch *10*.

Für die Substrateigenschaften als Düngemittel ist es vorteilhaft, wenn die Merkmale *des ersten Teils* des Anspruches *11* erfüllt sind.

Die Merkmale *des zweiten Teils* des Anspruchs *11* verhindern P-Verluste durch Auswaschung.

Anspruch *12* beschreibt ein vorteilhaftes Düngemittel, das auf Basis dieser Ascheagglomerate hergestellt wurde.

*Anspruch 13 beschreibt eine vorteilhafte Verwendung der Ascheagglomerate als Düngemittel.*

Die dem Verfahren zugrunde liegenden und von Schwermetallen zu befreienden Aschen entstehen bei der Verbrennung von, insbesondere phosphathältigem, Klärschlamm und/oder Bioabfall, beispielsweise Holzabfällen, Altpapier, etc. Dabei fallen Aschen mit einem Phosphorgehalt von ca. 5-30% an. Die organischen Schadstoffe einschließlich endokriner Substanzen und dgl. wurden bereits durch den Verbrennungsprozess weitgehend zerstört. Die wichtigsten chemischen Bestandteile derartiger Aschen sind SiO₂, CaO, Al₂O₃, Fe₂O₃ sowie P₂O₅. Allerdings sind auch Schwermetalle, insbesondere Pb, Cd, Cr, Cu, Ni, Co, Zn, Hg etc enthalten.

Die Aschepartikel unterteilen sich dabei im Wesentlichen in zwei Gruppen, nämlich einerseits in die Aerosolpartikel bzw. Flugaschen und andererseits in die groben Partikel.

Die Aerosolpartikel haben einen Durchmesser von ungefähr 0,5 µm, während die groben Partikel einen Durchmesser von etwa 30 bis 50 µm haben. Demzufolge hat die Asche eine sehr große spezifische Oberfläche von in etwa 5 bis 6 m²/g.

Die Form von Aerosolpartikel ist eher regelmäßig, beispielsweise rechteckig oder stäbchenförmig, während die groben Partikel meist eine unregelmäßige Form aufweisen.

Die chemische Zusammensetzung der Aerosolpartikel besteht vorwiegend aus Schwermetallsalzen und Schwermetalloxiden. Die groben Partikel enthalten eher komplexe Verbindungen, wie Alumosilikate od. dgl.

Auch die Konzentration der Schwermetalle unterscheidet sich deutlich zwischen den Aerosolpartikein und den groben Partikeln. So weisen beispielsweise Aerosolpartikel eine Zinkkonzentration von bis zu 40000 mg/kg und eine Cadmiumkonzentration von zirka 100 mg/kg auf, während grobe Partikel eine Zinkkonzentration von zirka 550 mg/kg und eine Cadmiumkonzentration von zirka 30 mg/kg aufweisen.

Auch die Entstehung derartiger Aschepartikel ist unterschiedlich. Aerosolpartikel werden durch die flüchtigen schwermetallhältigen Elemente gebildet, die während der thermischen Zersetzung des Abfalls verdampfen. Die groben Aschepartikel werden durch den Staub der verbrannten Abfälle durch teilweises Schmelzen gebildet.

Das erfindungsgemäße Verfahren zur Reduktion des Schwermetallgehaltes in der Asche wird so durchgeführt, dass zu der schwermetallhältigen Asche in einem ersten Schritt umweltverträgliche Metallchloride, insbesondere Alkali- und/oder Erdalkalimetallchloride, mit oder ohne Kristallwasser zugegeben werden. Als Alkali-und/oder Erdalkalimetallchloride sind insbesondere Kalziumchlorid, Kaliumchlorid oder Magnesiumchlorid einsetzbar, es sind jedoch auch andere unweltverträgliche Metallchloride möglich.

Außerdem können zusätzliche Füllstoffe zugemischt werden. Durch entsprechende Auswahl der Ausgangsstoffe bzw. Füllstoffe kann die Zusammensetzung des Endproduktes bereits jetzt festgelegt werden und so ein bestimmtes Düngemittel für einen bestimmten Einsatzzweck gestaltet werden.

Die Zugabe der Alkali- und/oder Erdalkalimetallchloride kann einerseits in trockener Pulverform erfolgen, andererseits auch als wässrige Lösung der Chloride. Eine derartige wässrige Lösung enthält 5 bis 40 Gew% Alkali- und/oder Erdalkalimetallchloride.

Die Mischungsverhältnisse zwischen der Asche und den Alkali- und/oder Erdalkalimetallchloriden kann in einem gewissen Verhältnis variieren. So besteht eine vorteilhafte Mischung aus 60 bis 95 Gewichts% Asche und 5 bis 40 Gewichts% Metallchloriden, bezogen auf das Gesamtgewicht der Mischung.

Werden Füllstoffe zugesetzt, so werden die Füllstoffe in einem Ausmaß von etwa 5 bis 40 Gew%, bezogen auf das Gesamtgewicht der Mischung, zu der Mischung aus Asche und Metallchloriden zugegeben. Eine derartige Zusammensetzung der granulierfertigen Mischung weist dann Asche mit 55 bis 90 Gew%, Metallchloride mit 5 bis 40 Gew% sowie Füllstoffe mit 1 bis 50 Gew%, vorzugsweise 3 bis 20 Gew%, auf. Als Füllstoffe kommen beispielsweise feingemahlene Kohle, Tonerde, gemahlener Klärschlamm, feine Holzabfälle oder fein gemahlene Papierabfälle in Betracht. Insbesondere kann auch feinkörniges anorganisches Material eingesetzt werden, das bei seiner Erwärmung über 900° keine toxischen Gase freisetzt. Beispielsweise kann dafür Kalk verwendet werden. Auch können die Füllstoffe in flüssiger Form, z.B. in Form von 30% H₃PO₄, eingebracht werden.

Es ist vorteilhaft, wenn die Ausgangsstoffe für die Granulierung relativ feinkörnig sind. So sollten sich die Korngrößen der Asche und der Metallchloride in einem Bereich von unter 500 µm bewegen und die Korngrößen der Füllstoffe in einem Bereich von unter 1000 µm.

Weiters sollte die Mischung vor der Granulierung möglichst homogen ausgebildet sein.

In einem nächsten Schritt wird eine Agglomeration bzw. eine Kompaktierung bzw. ein Stückigmachen der pulverförmigen Mischung durchgeführt. Dabei werden je nach Verfahrensführung unregelmäßige Granulate in Form asymmetrischer Aggregate und/oder regelmäßig geformte Pellets geformt. Die Granulierung/Pelletierung der Mischung wird nach einem bekannten Verfahren durchgeführt. Im weiteren wird beispielhaft von Granulierung gesprochen.

Die Granulierung sollte Granulatkörner mit einem Durchmesser von zirka 3 bis 30 mm ergeben.

Anschließend erfolgt die Erwärmung des so erhaltenen Granulates. Dadurch bilden sich im Granulat Schwermetallchloride, die bei einer gewissen Temperatur flüchtig werden und abgetrennt werden können. Daher ist es wichtig, dass das Granulat auf eine Temperatur über dem Siedepunkt der sich bildenden Schwermetallchloride erwärmt wird. Erst dadurch kommt es zu einer effektiven Abtrennung der Schwermetalle aus der Asche.

Um die Effizienz der Extraktion zu steigern, kann die Erwärmung zweistufig erfolgen, wobei die Temperatur in einem ersten Erwärmungs- bzw. Trocknungsschritt für eine bestimmte Zeit, insbesondere für zumindest 30 min, unterhalb des Siedepunktes der sich bildenden Schwermetallchloride, insbesondere konstant, gehalten wird. Dadurch wird das Granulat getrocknet, um im darauffolgenden thermischen Prozess ein Minimum an Energie zu verbrauchen.

Dann wird in einem zweiten Erwärmungsschritt die Temperatur erhöht, und zwar auf einen Wert über dem Siedepunkt der sich bildenden Schwermetallchloride. Dort wird die Temperatur, vorzugsweise für maximal 60 min, wiederum insbesondere konstant, gehalten.

Die Temperatur im ersten Erwärmungsschritt bzw. Trocknungsschritt sollte unterhalb 300°C liegen, die Temperatur im zweiten Erwärmungsschritt sollte zwischen 900 und 1100°C liegen. Bei einem Wert von unter 900°C ist die Temperatur zu gering, um eine effiziente Entfrachtung der Schwermetalle als gasförmige Chloride zu gewährleisten, bei einer Temperatur über 1100°C kommt es zu einer Sinterung der Granulate und zu einer Verschlechterung der Ausbeute. Da die Schwermetallchloride überwiegend in einem Bereich zwischen 900°C und 1000°C verdampfen, ist es zur Erzielung einer optimalen Ausbeute vorteilhaft die Granulate auf eine Temperatur von >1000°C zu erhitzen. Je näher die Temperatur bei 1100°C liegt, desto vorteilhafter und effektiver verläuft die Schwermetallentfrachtung.

Bei einem Einsatz von Magnesiumchlorid sollte die Temperatur im ersten Erwärmungsschritt unter 110°C liegen, bei einem Einsatz von Kalziumchlorid sollte die Temperatur im ersten Erwärmungsschritt unter 260°C gehalten werden.

Die Erwärmung kann direkt oder indirekt in einem einzigen Reaktor, insbesondere einem Drehrohrofen, oder zwei aufeinanderfolgenden Reaktoren, insbesondere Trockner und Drehrohrofen, erfolgen.

Aus dem Reaktor werden abschließend die gasförmigen Schwermetallchloride abgetrennt und anschließend kondensiert und an einem Staubfilter oder Nasswäscher abgeschieden.

### Nachfolgendes Beispiel zeigt einen vorteilhaften Weg der Verfahrensführung auf:

Klärschlämmasche wird trocken und bei Raumtemperatur in einen Mischer gegeben. Dazu wird ein Erdalkalichloridgemisch beigefügt und eventuell einige Füllstoffe, welche den Energiebedarf im darauffolgenden thermischen Aggregat reduzieren. Das Gewichtsverhältnis von Asche zu Chlorid liegt bei etwa 85:15. Bei Zugabe von Füllstoffen wird dieses Verhältnis anteilsmäßig angepasst. Die maximale Füllstoffmenge liegt bei 40 Gew%. Im Mischer wird ein Wassergehalt von etwa 25 Gew% durch Zugabe von Frischwasser eingestellt. Die Mischzeit beträgt maximal 10 Minuten.

Danach wird die Mischung auf einen Granulierteller aufgegeben, um Pellets der Größe 5 bis 20mm zu erhalten. Die Dauer der Granulierung liegt bei 5-15 min. Gegebenenfalls muss noch Wasser zudosiert werden, um einen optimalen Granulierprozess herstellen zu können.

Die erhaltenen Pellets werden in einem Trockner bei max. 150°C von Wasser befreit. Der Trocknungsvorgang benötigt etwa 10 min und kann in einem Trommeltrockner oder Bandtrockner durchgeführt werden.

Die getrockneten Pellets werden in einem thermischen Aggregat bis knapp unter die Sintertemperatur erwärmt, in diesem Fall etwa 900-1000°C. Die Verweilzeit bei dieser Temperatur liegt bei mind. 10 min, wobei darauf zu achten ist, dass die Temperatur in der Bandbreite von 900°C und 1000°C konstant eingestellt ist.

Die entstehenden Rauchgase werden einer feuchten Rauchgasreinigung unterzogen und entsprechen am Kamin den geforderten Richtlinien. Der Reststoff, den man aus der Rauchgasreinigung erhält, wird nach Möglichkeit ausgestuft und obertägig deponiert.

Die so von Schwermetallen entfrachteten Pellets werden in einen Kühler ausgetragen und die sich dadurch erwärmende Luft wieder im thermischen Prozess genutzt. Die auf Umgebungstemperatur abgekühlten Pellets werden gemahlen und mit den restlichen Nährstoffen versetzt und granuliert, sodass ein Mehrnährstoffdünger mit den gleichen chemischen und physikalischen Eigenschaften wie herkömmlicher Dünger, entsteht.

Die nachfolgenden Tabellen 2a und 2b zeigen einige Beispiele der Schwermetallentfrachtung für MgCl₂ sowie KCI als Chlor-Donor.

**Tabelle 2a:**

| **Asche** | **MgGl₂** | **Temp.** | **Zeit** | **Cd** | | **Cu** | | **Pb** | | **Zn** | |
|---|---|---|---|---|---|---|---|---|---|---|---|
| (%) | (%) | (°C) | (min) | in (mg/kg TS) | out (mg/kg TS) | in (mg/kg TS) | out (mg/kg TS) | in (mg/kg TS) | out (mg/kg TS) | in (mg/kg TS) | out (mg/kg TS) |
| 95 | 5 | 900 | 30 | 3 | 1 | 502 | 401 | 233 | 58 | 1817 | 1096 |
| 90 | 10 | 1000 | 30 | 3 | 1 | 483 | 325 | 232 | 27 | 1752 | 751 |
| 85 | 15 | 1100 | 30 | 3 | 0 | 405 | 205 | 194 | 14 | 1506 | 440 |

**Tabelle 2b:**

| **Asche** | **KCI** | **Temp.** | **Zeit** | **Cd** | | **Cu** | | **Pb** | | **Zn** | |
|---|---|---|---|---|---|---|---|---|---|---|---|
| (%) | (%) | (°C) | (min) | in (mg/kg TS) | out (mg/kg TS) | in (mg/kg TS) | out (mg/kg TS) | in (mg/kg TS) | out (mg/kg TS) | in (mg/kg TS) | out (mg/kg TS) |
| 95 | 5 | 900 | 30 | 3 | 1 | 483 | 134 | 212 | 16 | 1779 | 1422 |
| 90 | 10 | 1000 | 30 | 3 | 1 | 413 | 104 | 181 | 14 | 1536 | 1277 |
| 85 | 15 | 1100 | 30 | 3 | 0 | 390 | 46 | 187 | 9 | 1446 | 1117 |

Das von den Schwermetallen weitgehend befreite Granulat kann nun entweder direkt als Düngemittel eingesetzt werden oder zu einem entsprechenden Düngemittel weiterverarbeitet werden.

In Tabelle 3 sind die Freisetzungsraten für Phosphor des erhaltenen schwermetallreduzierten Granulates beschrieben.

**Tabelle 3:**

| Gesamtmenge an P₂O₅, % | Menge an P₂O₅ verdünnt in Wasser, % | Menge an P₂O₅ verdünnt in neutraler CA, % | Menge an P₂O₅ verdünnt in Zitronensäure, % |
|---|---|---|---|
| 11,20 | 3,69 | 6,74 | 11,18 |

Aus dem erfindungsgemäßen Verfahren wird ein Ascheagglomerat bzw. -granulat erhalten, das für die Düngung äußerst vorteilhafte Eigenschaften aufweist. Die im Zuge des Verfahrens erhaltenen Aschegranulate weisen eine ganz besondere Matrix aus Asche, insbesondere aus Silicium-, Aluminium-, Magnesium-, Phosphor-, Kalzium- und/oder Eisenverbindungen auf. Die Matrix dieser Aschegranulate hat eine gesinterte Struktur. Eine derartige Struktur kann nicht über herkömmliche Verfahren erhalten werden, bei denen Asche sowie Zuschlagsstoffe kalt gemischt bzw. granuliert werden.

Die Matrix besteht zum größten Teil aus amorphen Bereichen, in kleinen Prozentanteilen können auch teilkristalline Bereiche vorliegen. Die Matrix weist eine Alumosilicat- bzw. Aluminosilicat-Struktur auf.

Die Granulatteilchen weisen eine Partikelgröße von in etwa 2 bis 5 mm und darüber auf. Die Granulatteilchen haben darüber hinaus eine Porosität zwischen 20 bis 40 Vol.-%, bezogen auf das Volumen des einzelnen Granulatteilchens.

Der Phosphorpentoxidgehalt jedes einzelnen Granulatteilchens beträgt mehr als 10 Gew%, bezogen auf das Gewicht jedes Granulatteilchens.

Das enthaltende Phosphorpentoxid ist zu 80 bis 100%, insbesondere 90 bis 100%, zitronensäurelöslich bzw. in, insbesondere 2%iger Zitronensäure löslich. Außerdem ist das enthaltene Phosphorpentoxid in Wasser nahezu unlöslich, insbesondere ist über 70% unlöslich, was P-Verluste durch Auswaschung verhindern sollte. Die genannten Prozentangaben beziehen sich auch die enthaltene Gesamtmenge von P₂O₅.

Wie bereits bemerkt, sind die Gehalte an Schwermetallen reduziert und liegen deutlich unterhalb der geforderten Grenzwerte. Der Zinkgehalt bewegt sich unterhalb 0,025 Gew%, der Kadmiumgehalt unterhalb von 0,00015 Gew%. Der Bleigehalt bewegt sich in einem Bereich von weniger als 0,001 Gew% und der Kupfergehalt weniger als 0,01 Gew%, wobei sich die Gewichtsprozente/-promille jeweils auf das Gewicht eines Pellets bzw. Granulatteilchens beziehen.

Um aus dem erhaltenen Ascheagglomerat bzw. dem schwermetallreduzierten Granulat ein Düngemittel zu erhalten, das den gewünschten Anforderungen entspricht und die relevanten Komponenten enthält, kann entweder das Granulat zerkleinert oder gemahlen werden, wobei anschließend ein gemahlener Zuschlagsstoff, der die gewünschten Nährstoffe enthält, zugesetzt wird. Alternativ kann zu dem Granulat auch ein feiner oder grober Zuschlagsstoff zugegeben werden und erst das Gemisch wird auf die entsprechende Korngröße zerkleinert oder gemahlen. Anschließend kann auch eine erneute Granulierung des nun fertigen Düngemittelgemisches erfolgen.

## Patentansprüche

1. Verfahren zur Abtrennung von Schwermetallen, beispielsweise Pb, Cu, Cd, Zn, Cr, etc., aus Asche, insbesondere aus Klärschlammasche, wobei in einem ersten Schritt zu der Asche umweltverträgliche Metallchloride, gewählt aus Alkali- und/oder Erdalkalimetallchloriden, vorzugsweise CaCl₂, KCI oder MgCl₂, und gegebenenfalls Füllstoffe zugemischt werden und die Mischung einer Agglomeration bzw. Kompaktierung unterzogen wird, insbesondere granuliert bzw. zu einem Granulat verarbeitet wird, und anschließend das so erhaltene Agglomerat bzw. Granulat auf eine Temperatur über den Siedepunkt der sich bildenden Schwermetallchloride erwärmt wird und die aus dem Agglomerat austretenden gasförmigen Schwermetallchloride abgetrennt werden.

2. Verfahren nach Anspruch 1, **dadurch gekennzeichnet, dass** zur Agglomeration eine, insbesondere homogene, pulverförmige Mischung aus 60 bis 95 Gew% Asche und 5 bis 40 Gew% Alkali- und/oder Erdalkalimetallchloriden, bezogen auf das Gesamtgewicht der Mischung, eingesetzt wird,
oder dass zur Agglomeration eine, insbesondere homogene, pulverförmige Mischung aus 55 bis 90 Gew% Asche und 5 bis 40 Gew% Alkali- und/oder Erdalkalimetallchloriden und 1 bis 40 Gew%, vorzugsweise 3 bis 20 Gew%, feinkörnige Füllstoffe, insbesondere porositätserhöhende Füllstoffe, beispielsweise fein gemahlene Kohle, Pyrolysekoks, Klärschlamm, Holzabfälle, Papierabfälle, Tonerde etc., vorzugsweise feinkörniges anorganisches Material, das bei einer Erwärmung über 900°C keine toxischen Gase freisetzt, beispielsweise Kalk, eingesetzt wird.

3. Verfahren nach einem der Ansprüche 1 bis 2, **dadurch gekennzeichnet, dass** die Alkali- und/oder Erdalkalimetallchloride und gegebenenfalls die Füllstoffe als wässrige Lösung, enthaltend 5 bis 40 Gew% Alkali- und/oder Erdalkalimetallchloride, zu der Asche zugegeben werden.

4. Verfahren nach einem der Ansprüche 1 bis 3, **dadurch gekennzeichnet, dass** die Agglomeration bis zu einem Durchmesser der Granulatkörner/Pellets von 3 bis 30 mm durchgeführt wird.

5. Verfahren nach einem der Ansprüche 1 bis 4, **dadurch gekennzeichnet, dass** die Erwärmung des Agglomerats zweistufig erfolgt, wobei die Temperatur in einem ersten Erwärmungsschritt für eine bestimmte Zeit, insbesondere für zumindest 30 min, unterhalb des Siedepunkts der sich bildenden Schwermetallchloride, insbesondere konstant, gehalten wird und anschließend in einem zweiten Erwärmungsschritt auf eine Temperatur über den Siedepunkt der sich bildenden Schwermetallchloride erwärmt wird und vorzugsweise für maximal 60 min, insbesondere konstant, gehalten wird,
und/oder
dass die Erwärmung des Agglomerats zweistufig erfolgt, wobei die Temperatur in einem ersten Erwärmungsschritt für eine bestimmte Zeit, insbesondere für zumindest 30 min, unter 300°C, insbesondere konstant, gehalten wird und anschließend in einem zweiten Erwärmungsschritt auf eine Temperatur von 900° bis 1100°C erwärmt wird und vorzugsweise für maximal 60 min, insbesondere konstant, gehalten wird, wobei die Temperatur im ersten Erwärmungsschritt bei einem Einsatz von MgCl₂ unter 110°C und bei einem Einsatz von CaCl₂ unter 260°C gehalten wird.

6. Verfahren nach einem der Ansprüche 1 bis 5, **dadurch gekennzeichnet, dass** die Erwärmung direkt oder indirekt in einem einzigen oder in zwei aufeinanderfolgenden Reaktoren erfolgt,
und/oder
dass die Asche und die Alkali- und/oder Erdalkalimetallchloride in einer Korngröße von < 500µm und die Füllstoffe in einer Korngröße von < 1000µm eingesetzt werden.

7. Verfahren zur Herstellung von Düngemitteln aus nach dem Verfahren gemäß einem der Ansprüche 1 bis 6 erhaltenen, schwermetalfreduzierten Agglomerat, insbesondere Granulat, wobei das so erhaltene Agglomerat zerkleinert bzw. gemahlen wird und anschließend zumindest ein gemahlener Zuschlagstoff zugesetzt wird oder wobei zu dem so erhaltenen Agglomerat zumindest ein Zuschlagstoff zugegeben wird und das Gemisch auf die gewünschte Korngröße zerkleinert bzw. gemahlen wird und wobei die auf diese Weise erhaltene Mischung von Agglomerat und Zuschlagstoff(en) gegebenenfalls agglomeriert wird.

8. Ascheagglomerat in Form von einzelnen Granulatteilchen bzw. Pellets mit Substrateigenschaften, geeignet zur Weiterverarbeitung zu Düngemitteln, erhältlich nach dem Verfahren nach einem der Ansprüche 1 bis 6, wobei die Granulatteilchen bzw. Pellets eine gesinterte Matrix aus Asche, insbesondere aus Si-, Al-, Mg-, P-, Ca- und/oder Fe-Verbindungen, aufweisen, wobei jedes Granulattgilchen bzw. Pellet einen Schwermetallgehalt von
Zn < 0.025 Gew%
Cd < 0,00015 Gew%
Pb < 0,001 Gew % und
Cu < 0,01 Gew%,
bezogen auf das Gewicht jedes Pellets bzw. Granulatteilchens, aufweist.

9. Ascheagglomerat nach Anspruch 8, **dadurch gekennzeichnet, dass** die, insbesondere homogen strukturierte, Matrix eine Alumosilikat-Struktur aufweist.

10. Ascheagglomerat nach einem der Ansprüche 8 bis 9, **dadurch gekennzeichnet, dass** die Granulatteilchen bzw. Pellets Partikelgrößen von mehr als 2 mm, insbesondere mehr als 5 mm, aufweisen,
und/oder dass die Granulatteilchen bzw. Pellets eine Porosität zwischen 20 und 40 Vol%, bezogen auf das Volumen jedes Pellets bzw. Granulatteilchens, aufweisen,
und/oder,
dass die Granulatteilchen bzw. Pellets einen P₂O₅-Gehalt von mehr als 10 Gew%, bezogen auf das Gewicht jedes Pellets bzw. Granulatteilchens, aufweisen.

11. Ascheagglomerat nach einem der Ansprüche 8 bis 10, **dadurch gekennzeichnet, dass** das enthaltene P₂O₅ zu 80 bis 100%, insbesondere 95 bis 100%, zitronensäurelöslich bzw. in, insbesondere 2%iger, Zitronensäure löslich ist,
und/oder
dass das enthaltene P₂O₅ weitestgehend, insbesondere zu über 70%, vorzugsweise über 85%, wasserunlöslich ist.

12. Düngemittel enthaltend aus Ascheagglomerat nach einem der Ansprüche 8 bis 11 abgeleitete, insbesondere originäre oder gemahlene und/oder gegebenenfalls erneut granulierte, Partikel.

13. Verwendung der Ascheagglomerate gemäß einem der Ansprüche 8 bis 12 als Düngemittel.

## Claims

1. A method for separating heavy metals, for example Pb, Cu, Cd, Zn, Cr, etc., from ash, in particular sewage sludge ash, wherein in a first step environmentally compatible metal chlorides selected from alkali and/or alkaline earth metal chlorides, preferably CaCl₂, KCl or MgCl₂, and optionally fillers are added to the ash and the mixture is subjected to agglomeration or compaction, in particular granulated or processed into a granulate, whereafter the agglomerate or granulate obtained is warmed to a temperature above the boiling point of the forming heavy metal chloride and the gaseous heavy metal chlorides escaping from the agglomerate are separated.

2. The method according to claim 1 **characterized in that** a, particularly homogeneous, pulverized mixture of 60 to 95 wt% of ash and 5 to 40 wt% of alkali and/or alkaline earth metal chlorides, based on the total weight of the mixture, is used for agglomeration, or that a, particularly homogeneous, pulverized mixture of 55 to 90 wt% of ash and 5 to 40 wt% of alkali and/or alkaline earth metal chlorides and 1 to 40 wt%, preferably 3 to 20 wt%, of fine-grained fillers, in particular fillers increasing the porosity, for example finely ground coal, pyrolysis coke, sewage sludge, waste wood, waste paper, clay, etc., preferably a finely ground inorganic material that does not release any toxic gases when heated to more than 900 °C, for example lime, is used for agglomeration.

3. The method according to any one of the claims 1 to 2 **characterized in that** the alkali and/or alkaline earth metal chlorides and optionally the fillers are added to the ash as an aqueous solution containing 5 to 40 wt% of alkali and/or alkaline earth metal chlorides.

4. The method according to any one of the claims 1 to 3 **characterized in that** the agglomeration is conducted up to a diameter of the granules/pellets of 3 to 30 mm.

5. The method according to any one of the claims 1 to 4 **characterized in that** the agglomerate is heated in two steps, wherein in a first heating step the temperature is kept below the boiling point of the forming heavy metal chlorides, in particular at a constant value, for a certain period of time, in particular at least 30 min, and in a subsequent second heating step the temperature is raised above the boiling point of the forming heavy metal chlorides and preferably maintained for a maximum of 60 min, in particular at a constant value, and/or the agglomerate is heated in two steps, wherein in a first heating step the temperature is kept below 300 °C, in particular at a constant value, for a certain period of time, in particular at least 30 min, and in a subsequent second heating step the temperature is raised to 900 to 1,100 °C and maintained for a maximum of 60 min, in particular at a constant value, wherein the temperature in the first heating step is kept below 110 °C when MgCl₂ is used and below 260 °C when CaCl₂ is used.

6. The method according to any one of the claims 1 to 5 **characterized in that** heating is carried out directly or indirectly in one single or in two successive reactors and/or the ash and the alkali and/or alkaline earth metal chloride used have a grain size of <500 µm and the fillers used have a grain size of <1000 µm.

7. A method for producing fertilizers from an agglomerate, in particular granulate, obtained according to the method of any one of the claims 1 to 6 with reduced heavy metals, wherein the agglomerate thus obtained is comminuted or ground and then at least one ground loading material is added, or wherein at least one loading material is added to the agglomerate thus obtained and the mixture is comminuted or ground to the desired grain size, and wherein the mixture of the agglomerate and the loading material(s) thus obtained is optionally agglomerated.

8. An ash agglomerate in the form of individual granules or pellets with substrate properties that is suitable for further processing into fertilizers and obtainable according to the method of any one of the claims 1 to 6, wherein the granules or pellets have a matrix of ash, in particular Si, Al, Mg, P, Ca and/or Fe compounds, wherein each granule or pellet has a heavy metal content of
Zn < 0.025 wt%
Cd < 0.00015 wt%
Pb < 0.001 wt% and
Cu 0.01 wt%,
based on the weight of each respective pellet or granule.

9. The ash agglomerate according to claim 8 **characterized in that** the, particularly homogeneously structured, matrix has an alumosilicate structure.

10. The ash agglomerate according to any one of the claims 8 to 9 **characterized in that** the granules or pellets have particle sizes of more than 2 mm, in particular more than 5 mm, and/or the granules or pellets have a porosity between 20 and 40 vol%, based on the volume of each respective pellet or granule, and/or the granules or pellets have a P₂O₅ content of more than 10 wt%, based on the weight of each respective pellet or granule.

11. The ash agglomerate according to any one of the claims 8 to 10 **characterized in that** the P₂O₅ obtained is soluble in citric acid, in particular 2 % citric acid, at 80 to 100 %, in particular 95 to 100 %, and/or the P₂O₅ obtained is insoluble in water at more than 70 %, preferably more than 85 %.

12. A fertilizer containing particles derived from the ash agglomerate according to any one of the claims 8 to 11, in particular original or ground and/or optionally once again granulated particles.

13. Use of the ash agglomerate according to any one of the claims 8 to 12 as a fertilizer.

## Revendications

1. Procédé pour séparer des métaux lourds, par exemple Pb, Cu, Cd, Zn, Cr, etc., des cendres, en particulier des cendres des boues d'épuration, dans lequel, dans une première étape, des chlorures métalliques non polluants, choisis parmi les chlorures des métaux alcalins et/ou les chlorures des métaux alcalino-terreux, de préférence CaCl₂, KCI ou MgCl₂, ainsi qu'éventuellement des charges, sont mélangés à la cendre et le mélange est soumis à une agglomération ou un compactage, en particulier granulé ou transformé en granulat, et puis l'ainsi obtenu agglomérat ou granulat est chauffé à une température supérieure au point d'ébullition des chlorures de métaux lourds formés et les chlorures des métaux lourds gazeux échappant de l'agglomérat sont séparés.

2. Procédé selon la revendication 1, **caractérisé en ce qu'**un mélange pulvérulent, en particulier homogène, de 60 à 95 % en poids des cendres et 5 à 40 % en poids des chlorures des métaux alcalins et/ou des métaux alcalino-terreux, par rapport au poids total du mélange, est utilisé pour l'agglomération ou qu'un mélange pulvérulent, en particulier homogène, de 55 à 90 % en poids de cendres, et 5 à 40 % en poids des chlorures des métaux alcalins et/ou des métaux alcalino-terreux et 1 à 40 % en poids, de préférence 3 à 20 % en poids, des charges à grains fins, en particulier des charges qui augmentent la porosité tels que le charbon finement moulu, le coke de pyrolyse, les boues d'épuration, des déchets de bois, des déchets de papier, l'alumine, etc., de préférence des matériaux inorganique à grains fins, ce qui lorsqu'ils sont chauffés au-dessus de 900 °C ne libèrent pas des gaz toxiques, tels que la chaux, est utilisé pour l'agglomération.

3. Procédé selon l'une quelconque des revendications 1 à 2, **caractérisé en ce que** les chlorures des métaux alcalins et/ou des métaux alcalino-terreux, et éventuellement les charges, sont ajoutés à la cendre en tant qu'une solution aqueuse contenant 5 à 40 % en poids des chlorures des métaux alcalin et/ou des métaux alcalino-terreux.

4. Procédé selon l'une quelconque des revendications 1 à 3, **caractérisé en ce que** l'agglomération est effectuée jusqu'à un diamètre des granules ou des pellets de 3 à 30 mm.

5. Procédé selon l'une quelconque des revendications 1 à 4, **caractérisé en ce que** le chauffage de l'agglomérat est effectué en deux étapes, dans lequel la température est maintenue dans une première étape de chauffage pendant une certaine durée, en particulier pour au moins 30 minutes, inférieure au point d'ébullition des chlorures des métaux lourds formés, en particulier de manière constante, et est ensuite chauffée dans une seconde étape de chauffage à une température supérieure au point d'ébullition des chlorures des métaux lourds formés et est maintenue de préférence pendant 60 min en maximum, en particulier de manière constante, et/ou que le chauffage de l'agglomérat est effectué en deux étapes, dans lequel la température est maintenue dans une première étape de chauffage pendant une certaine durée, en particulier pour au moins 30 minutes, inférieure de 300 °C, en particulier de manière constante, et est ensuite chauffée dans une seconde étape de chauffage à une température de 900 °C à 1100 °C et est maintenue de préférence pendant 60 min en maximum, en particulier de manière constante, dans lequel, dans la première étape de chauffage, la température est maintenue inférieure à 110 °C si MgCl₂ est utilisé et inférieure à 260 °C si CaCl₂ est utilisé.

6. Procédé selon l'une quelconque des revendications 1 à 5, **caractérisé en ce que** le chauffage est effectué directement ou indirectement dans un seul réacteur ou dans deux réacteurs successifs et/ou que les cendres et les chlorures des métaux alcalins et/ou des métaux alcalino-terreux utilisés ont une taille du grain de <500 µm et les charges utilisées ont une taille du grain de <1000 µm.

7. Procédé pour la production d'engrais à partir d'un agglomérat, en particulier d'un granulat, contenant des métaux lourds réduits et obtenu par un procédé selon l'une quelconque des revendications 1 à 6, dans lequel l'agglomérat ainsi obtenu est broyé ou moulu et ensuite au moins un additif moulu est ajouté, ou dans lequel un additif est ajouté à l'agglomérat ainsi obtenu et le mélange est broyé ou moulu à la taille du grain souhaitée et le mélange ainsi obtenu de l'agglomérat et de l'additif ou des additifs est éventuellement aggloméré.

8. Agglomérat des cendres sous forme de granules ou de pellets individuels avec des propriétés de substrat, étant approprié à la transformation en engrais et procurable par le procédé selon l'une quelconque des revendications 1 à 6, les granules ou les pellets comportant une matrice vitrifiée de cendres, en particulier de composés de Si, Al, Mg, P, Ca ou Fe, dans lesquelles chaque granule ou pellet a une teneur en métaux lourds comme suivant:
Zn < 0,025 % en poids,
Cd < 0,00015 % en poids,
Pb < 0,001 % en poids.
Cu < 0,01 % en poids,
par rapport au poids de chaque pellet ou granule.

9. Agglomérat de cendres selon la revendication 8, **caractérisé en ce que** la matrice, in particulier d'une structure homogène, a une structure d'aluminosilicate.

10. Agglomérat de cendres selon l'une quelconque des revendications 8 à 9, **caractérisé en ce que** les tailles de particules des granules ou des pellets sont plus de 2 mm, notamment plus de 5 mm, et/ou que la porosité des granules ou des pellets est de 20 à 40 % en volume, par rapport au volume de chaque pellet ou granule, et/ou la teneur en P₂O₅ des granules est plus de 10 % en poids, par rapport au poids de chaque pellet ou granule.

11. Agglomérat de cendres selon l'une quelconque des revendications 8 à 10, **caractérisé en ce que** le P₂O₅ contenu est soluble de 80 à 100 %, en particulier de 95 à 100 %, dans l'acide citrique, en particulier dans l'acide citrique de 2 %, et/ou que le P₂O₅ contenu est en grande partie, en particulier de plus de 70 %, de préférence de plus de 80 %, insoluble dans l'eau.

12. Engrais contenant des particules dérivées d'un agglomérat des cendres par un procédé selon l'une quelconque des revendications 8 à 11, en particulier sous forme originale ou moulu et/ou éventuellement granulées de nouveau.

13. L'utilisation des agglomérats de cendres selon l'une quelconque des revendications 8 à 12 en tant qu'engrais.
